# EUROPEAN PATENT APPLICATION

(11) **EP 4 068 208 A1**
(43) Date of publication of application: **05.10.2022**
(21) Application number: 22165772.9
(22) Date of filing: 31.03.2022
(51) Int. Cl.: G06T 7/33, G06T 7/11

(54) **POINT CLOUD INFORMATION PROCESSING DEVICE, POINT CLOUD INFORMATION PROCESSING METHOD, AND POINT CLOUD INFORMATION PROCESSING PROGRAM**

(30) Priority: 31.03.2021 JP 2021062011
(71) Applicant: TOPCON CORPORATION, Tokyo 174-8580 (JP)
(72) Inventor: YARIMIZU, Kaede, Tokyo, 1748580 (JP); SASAKI, Takeshi, Tokyo, 1748580 (JP); ITO, Tadayuki, Tokyo, 1748580 (JP)
(74) Representative: Schmitt-Nilson Schraud Waibel Wohlfrom Patentanwälte Partnerschaft mbB

(57) **Abstract**

The point cloud information processing device includes: an image analyzer 31 configured to analyze pieces of image information taken from different viewpoints, recognize different segments in each of the images, assign a label to each of the regions, and generate labeled image information; a point cloud labeling unit 32 configured to assign, to each point of the pieces of point cloud information of the different viewpoints, a label of a corresponding segment in the labeled image information based on a positional information of each point, thereby generating pieces of labeled point cloud information; and a point cloud integration unit 33 configured to align the pieces of labeled point cloud information by using a label common in the pieces of labeled point cloud information.

## Description

### BACKGROUND

The present disclosure relates to point cloud information processing technology.

As a surveying device that obtains three-dimensional data of a survey target, a laser scanner is known. The laser scanner scans a laser beam, which is distance measuring light, and obtains point cloud information of a survey target. The point cloud information is information that is obtained by taking the target as a group of points and is data including positional information of each point (three-dimensional coordinates).

The point cloud information is not obtainable for areas that are in shadow (blind spots) from the laser scanner's viewpoint. This is called occlusion. To create a three-dimensional model having no occlusion, point clouds are obtained from a plurality of different viewpoints and integrated with each other. In this process, the point clouds obtained from the different viewpoints need to be matched with each other.

In this connection, an object recognition device is disclosed (see International Patent Publication WO2014/155715A1), which automatically extracts point clouds corresponding to the target and matches point clouds having an identical shape attribute based on measured point cloud data to assist aligning (also referred to as registration) the point clouds.

### SUMMARY

However, the method that extracts point clouds corresponding to the survey target based only on the point cloud data as disclosed in International Patent Publication WO2014/155715A1 has a problem in that the point clouds are not well aligned if the point clouds include a point cloud corresponding to an object with a small amount of characteristics such as a thin wall or a point cloud corresponding to a moving object such as a leave waving in the wind or an automobile.

The present disclosure is made to address this issue and it is an object of the present invention disclosure to provide a point cloud information processing device, a point cloud information processing method, and a point cloud information processing program which improves robustness in alignment of a plurality of point clouds by using pieces of image information and pieces of point cloud information obtained with a surveying device from a plurality of different viewpoints.

To achieve the above object, a point cloud information processing device of the present disclosure includes: an image analyzer configured to analyze first image information taken from a first viewpoint and second image information taken from a second viewpoint, recognize different segments in each of the images, assign a label to each of the segments, and generate first labeled image information and second labeled image information; a point cloud labeling unit configured to obtain first point cloud information including a group of points with positional information scanned from the first viewpoint and second point cloud information including a group of points with positional information scanned from the second viewpoint, assign, for each point in the first point cloud information, a label of a corresponding segment in the first labeled image information, based on the positional information of the point, to generate first labeled point cloud information, and assign, for each point in the second point cloud information, a label of a corresponding segment in the second labeled image information, based on the positional information of the point, to generate second labeled point cloud information; and a point cloud integration unit configured to align the first labeled point cloud information and the second labeled point cloud information by using labels that are common in the first labeled point cloud information and the second labeled point cloud information.

The point cloud information processing device may be such that the point cloud integration unit performs random sampling with respect to point clouds assigned with a label common in the first labeled point cloud information and the second labeled point cloud information, and performs alignment of the first labeled point cloud information and the second labeled point cloud information based on the positional information of the point clouds randomly sampled.

The point cloud information processing device may be such that, from a group of point clouds forming at least a part of an object corresponding to the label in the first labeled point cloud information and the second labeled point cloud information, the point cloud integration unit generates a representative point for the object, performs random sampling with respect to a plurality of the objects by using common labels, and aligns the first labeled point cloud information and the second labeled point cloud information based on the representative point of the object randomly sampled.

The point cloud information processing device may be such that the image analyzer analyzes the first image information and the second image information by using a pre-machine-learned image analyzing model, recognizes different segments in each image, and labels the segments to generate first labeled image information and second labeled image information.

The point cloud information processing device may be such that the point cloud integration unit is capable of displaying the point clouds of the first labeled point cloud information and the second labeled point cloud information, by different appearances for each of the labels assigned to the point clouds.

To achieve the above object, a point cloud information processing method of the present disclosure includes: an image analyzing step of an image analyzer analyzing first image information taken from a first viewpoint and second image information taken from a second viewpoint, recognizing different segments in each of the images, assigning a label to each of the segments, and generating first labeled image information and second labeled image information; a point cloud labeling step of a point cloud labeling unit obtaining first point cloud information including a group of points with positional information scanned from the first viewpoint and second point cloud information including a group of points with positional information scanned from the second viewpoint, assigning, for each point in the first point cloud information, a label of a corresponding segment in the first labeled image information, based on the positional information of the point, to generate first labeled point cloud information, and assigning, for each point in the second point cloud information, a label of a corresponding segment in the second labeled image information, based on the positional information of the point, to generate second labeled point cloud information; and a point cloud integrating step of a point cloud integration unit aligning the first labeled point cloud information and the second labeled point cloud information by using labels that are common in the first labeled point cloud information and the second labeled point cloud information.

To achieve the above object, a point cloud information processing program of the present disclosure causes a computer to execute: an image analyzing step of analyzing first image information taken from a first viewpoint and second image information taken from a second viewpoint, recognizing different segments in each of the images, assigning a label to each of the segments, and generating first labeled image information and second labeled image information; a point cloud labeling step of obtaining first point cloud information including a group of points with positional information scanned from the first viewpoint and second point cloud information including a group of points with positional information scanned from the second viewpoint, assigning, for each point in the first point cloud information, a label of a corresponding segment in the first labeled image information, based on the positional information of the point, to generate first labeled point cloud information, and assigning, for each point in the second point cloud information, a label of a corresponding segment in the second labeled image information, based on the positional information of the point, to generate second labeled point cloud information; and a point cloud integrating step of aligning the first labeled point cloud information and the second labeled point cloud information by using labels that are common in the first labeled point cloud information and the second labeled point cloud information.

The present disclosure using the above-described means provides a point cloud information processing device, a point cloud information processing method, and a point cloud information processing program which improves robustness in alignment of a plurality of point clouds by using pieces of image information and pieces of point cloud information obtained from a plurality of different viewpoints by using a surveying device.

### BRIEF DESCRIPTION OF THE DRAWINGS

FIG. 1 is a block diagram showing a point cloud information processing system including a point cloud information processing device according to an embodiment of the present disclosure.
FIG. 2 is a top view of the point cloud information processing system, showing a survey target and survey points.
FIG. 3 is a diagram showing exemplary first image information P1 taken from a first survey point L1 in FIG. 2.
FIG. 4 is a diagram showing exemplary first point cloud information Q1 scanned from the first survey point L1 in FIG. 2.
FIG. 5 is a diagram showing exemplary second image information P2 taken from a second survey point L2 in FIG. 2.
FIG. 6 is a diagram showing exemplary second point cloud information Q2 scanned from the second survey point L2 in FIG. 2.
FIG. 7 is a diagram showing exemplary first labeled image information p1.
FIG. 8 is a diagram showing exemplary second labeled image information p2.
FIG. 9 is a diagram showing exemplary first labeled point cloud information q1.
FIG. 10 is a diagram showing exemplary second labeled point cloud information q2.
FIG. 11 is a flowchart showing an analysis processing operation executed by an analysis processor of a point cloud information processing device according to the present embodiment.
FIG. 12 is exemplary display of a point cloud integrated information (three-dimensional model) in which alignment is failed.
FIG. 13 is a schematic block diagram showing a configuration of a computer according to the embodiment of the present disclosure.
FIG. 14 is a top view of first labeled point cloud information q1 in FIG. 9.
FIG. 15 is a top view of second labeled point cloud information q2 in FIG. 10.
FIG. 16 is a top view showing an example of fitting an object model to the first labeled point cloud information q1.
FIG. 17 is a top view showing an example of fitting an object model to the second labeled point cloud information q2.
FIG. 18 is a top view showing an example of sampling a mismatching object between pieces of labeled point cloud information.
FIG. 19 is a top view showing exemplary alignment using representative points of the object sampled in FIG. 18.
FIG. 20 is a top view showing an example of sampling a matching object between pieces of labeled point cloud information.
FIG. 21 is a top view showing exemplary alignment using representative points of the object sampled in FIG. 20.
FIG. 22 is a block diagram showing a point cloud information processing system including a point cloud information processing device according to a second variation.

### DETAILED DESCRIPTION

Hereinafter, embodiments of the present disclosure will be described in detail with reference to the drawings.

### <Configuration>

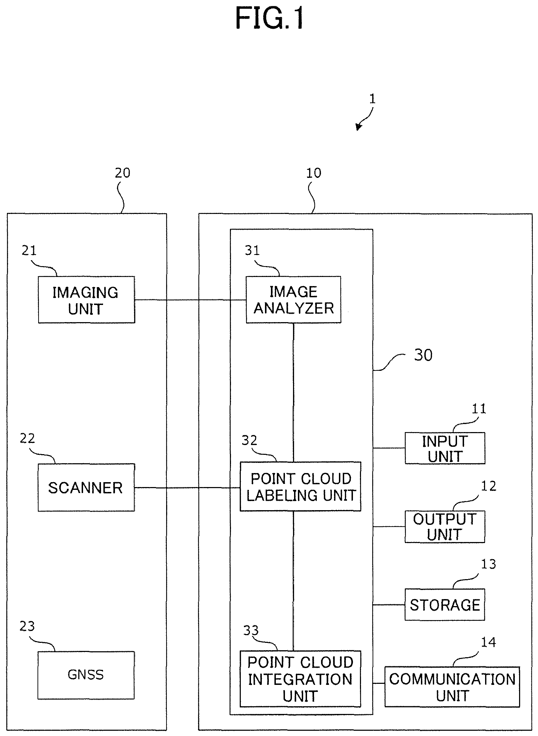

FIG. 1 is a schematic configuration diagram of a point cloud information processing system including a point cloud information processing device according to the present disclosure. With reference to the drawings, the following describes a configuration of a point cloud information processing system 1 including a point cloud information processing device 10 of the present embodiment.

As shown in FIG. 1, the point cloud information processing system 1 of the present embodiment includes the point cloud information processing device 10 and a surveying device 20. The point cloud information processing device 10 and the surveying device 20 are connected to each other in such a manner that wired or wireless communications is possible. In the present embodiment, the surveying device 20 is set in a plurality of different survey points to measure and capture an image of an object or a range that is a survey target from each of the survey points, thereby obtaining image information and three-dimensional point cloud information (hereinafter, simply referred to as point cloud information). In the present embodiment, the surveying device 20 is described as a land-based type, but may be a type that is mounted on a UAV or the like and performs measurement and surveying from the sky.

The point cloud information processing device 10 has a function of calculating positional relationship and performing alignment (registration) for a plurality of pieces of point cloud information of the survey target obtained from two or more different viewpoints, and a function of integrating the aligned pieces of point cloud information to create a three-dimensional model of the survey target. The point cloud information processing device 10 is a dedicated computer, a general-purpose computer in which software is installed, or the like, and includes an input unit 11 such as a keyboard, a mouse, or a touch panel, an output unit 12 capable of displaying an image such as a liquid crystal display, a storage 13, and a communication unit 14. Note that the input unit 11, the output unit 12, the storage 13, and the point cloud information processing device 10 may be connected to each other in such a manner that wired or wireless communications is possible.

The surveying device 20 is, for example, a three-dimensional laser scanner, and includes an imaging unit 21, a scanner 22, and a GNSS (Global Navigation Satellite System) 23. Note that the surveying device 20 may include a surveying control unit that controls the imaging unit 21, the scanner 22, and the GNSS 23.

The scanner 22 has a function of scanning by rotating in a horizontal direction while reciprocating a laser beam (distance measuring light) within a certain range in a vertical direction and generating point cloud information by obtaining point clouds including the survey target. Specifically, the scanner 22 measures (distance measurement) a relative distance from its position to a survey point of the survey target, based on the time from emission of a laser beam to return of the laser beam having reflected on an object. The scanner 22 also measures a relative angle with respect to the survey point, by detecting an emission direction (a horizontal angle and vertical angle) of the laser beam. The scanner 22 then calculates three-dimensional coordinates of each point from the measured relative distance and relative angle.

The imaging unit 21 is, for example, a camera and takes an image of the survey target and generates two-dimensional image information including RGB intensity or the like for each pixel. Further, since the image information also includes information of the horizontal angle with respect to the surveying device 20 at the time of taking the image, it is possible to calculate an angle relative to the emission direction of the laser beam of the scanner 22. Therefore, for example, the position of each point obtained by the scanner 22 can be associated with the position in the image taken by the imaging unit 21.

The GNSS 23 is, for example, a global navigation satellite system (GPS), and is capable of obtaining information of global position coordinates. In other words, the GNSS 23 is capable of obtaining positional information of the surveying device 20, that is, viewpoint positional information of the surveying device 20. The viewpoint positional information is an emission base point of the laser beam in the scanner 22 and is an imaging base point in the imaging unit 21. In a case where the surveying device 20 is set at a known point, the surveying device 20 can obtain the positional information without the GNSS 23, through an input operation by an operator. The scanner 22 can include the viewpoint positional information (emission base point of the laser beam) in the point cloud information based on the absolute position information of the surveying device 20. Further, the scanner 22 is capable of performing conversion into absolute positional information, from the relative positional information of the point cloud obtained by scanning the laser beam based on the absolute positional information of the surveying device 20. The imaging unit 21 can include the viewpoint positional information (imaging base point) in the image information, based on the absolute positional information of the surveying device 20.

The point cloud information processing device 10 includes an analysis processor 30 configured to analyze the image information taken by the imaging unit 21 and the point cloud information obtained by the scanner 22 of the surveying device 20.

More specifically, the analysis processor 30 includes an image analyzer 31, a point cloud labeling unit 32, a point cloud integration unit 33. The analysis processor 30 is capable of communicating with the input unit 11, the output unit 12, the storage 13, the communication unit 14, and the like of the point cloud information processing device 10. Further, the analysis processor 30 is capable of storing, in the storage 13, the image information and the point cloud information obtained from the surveying device 20.

The image analyzer 31 has a function of analyzing a plurality of pieces of image information obtained by the analysis processor 30. Specifically, the image analyzer 31 has a function of performing so-called semantic segmentation processing that uses a pre-machine-learned image analyzing model to automatically recognize segments corresponding to different objects and space in each image, and labeling each of the recognized segments. In other words, the image analyzer 31 is capable of recognizing the survey target in the image represented by the obtained pieces of image information, and assigning labels corresponding to the survey target. For example, the image analyzer 31 assigns a building label to a segment of a building in the image, assigns a pole label to the segment of a pole, a sky label to the sky, and a ground label to the ground. Further, for an unrecognizable segment, the image analyzer 31 assigns an unrecognizable label, and for example, assigns labels for each pixel in all the segments within the image. For each piece of image information, the image analyzer 31 performs the semantic segmentation processing using the image analyzing model to generate labeled image information. The labeled image information generated is stored in the storage 13.

The point cloud labeling unit 32 has a function of obtaining a plurality of pieces of labeled image information generated in the image analyzer 31 and a plurality of pieces of point cloud information generated in the scanner 22 of the surveying device 20, and generating labeled point cloud information from the labeled image information and the point cloud information of the same viewpoint.

Specifically, the point cloud labeling unit 32 extracts, from the storage 13, point cloud information and labeled image information related to the same viewpoint, based on viewpoint positional information in each of the point cloud information and the labeled image information. Then, for each point in the extracted point cloud information, the point cloud labeling unit 32 assigns labels of segments corresponding to those in the labeled image information of the same viewpoint, based on the positional information of each point, to generate labeled point cloud information. That is, the point cloud information is overlapped with each labeled segment of the labeled image information, and the label of the overlapped segment is reflected on each point so as to assign the label to each point (so-called point cloud annotation). The labeled point cloud information generated is stored in the storage 13.

The point cloud integration unit 33 has a function of performing, for each piece of labeled point cloud information generated in the point cloud labeling unit 32, alignment (registration) of point clouds on the basis of labels assigned to each point and generating point cloud integrated information in which the point clouds are integrated with one another. The point cloud integrated information serves as so-called three-dimensional model.

Specifically, the point cloud integration unit 33 extracts, from the storage 13, pieces of the labeled point cloud information with different pieces of viewpoint positional information, extracts by sampling (e.g., random sampling) point clouds with labels common in each piece of the labeled point cloud information, and obtains the positional information of each of the point clouds extracted. Then, the point cloud integration unit 33 performs alignment (registration) for the point clouds for which positional information is obtained, by a point cloud matching technique such as ICP ((Iterative Closest Point). By performing such alignment for the pieces of labeled point cloud information, the point cloud integration unit 33 generates point cloud integrated information in which pieces of point cloud information are integrated with each other. This point cloud integrated information is stored in the storage 13.

The point cloud information processing device 10 is capable of outputting the image information, the labeled image information, the point cloud information, the labeled point cloud information, the point cloud integrated information, and the like stored in the storage 13 to the output unit 12, editing these pieces of information based on an input via the input unit 11, and outputting them to an external device via the communication unit 14.

### <Specific Example of Analysis Procedure>

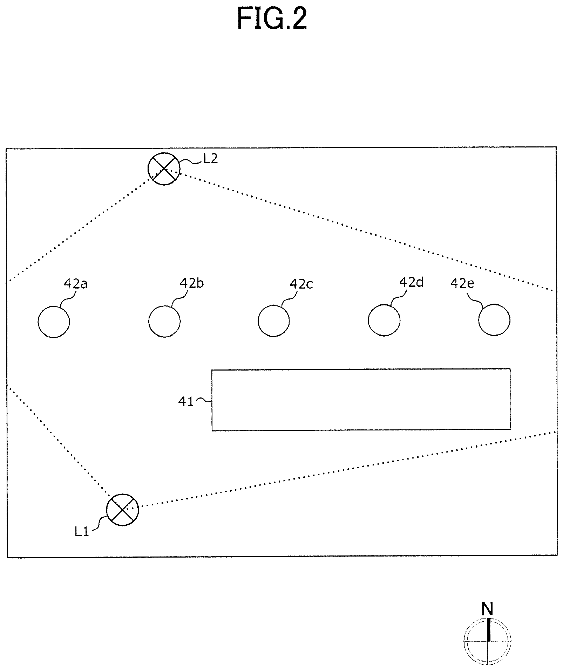

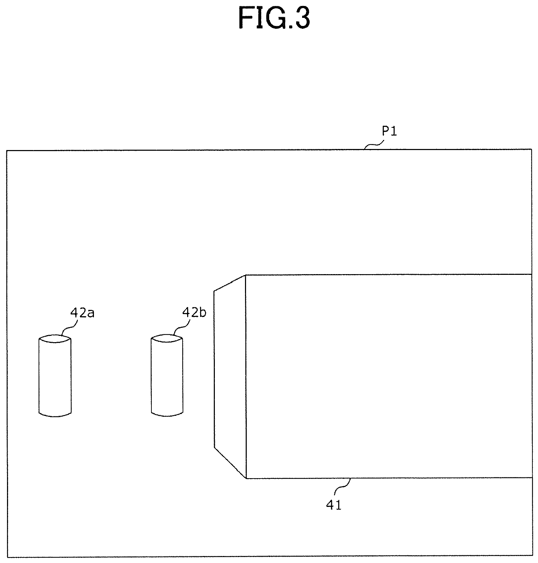

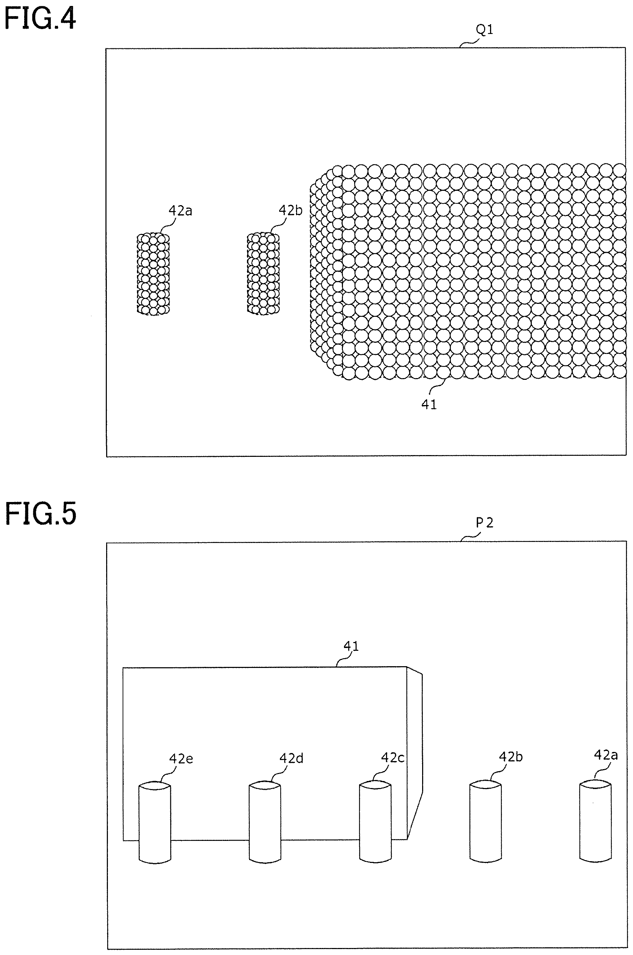

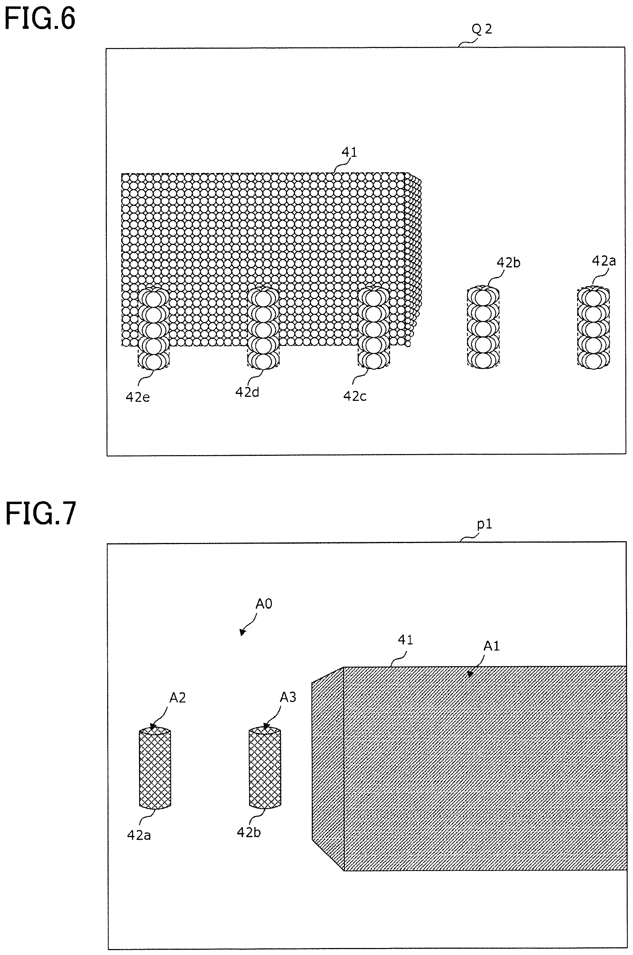

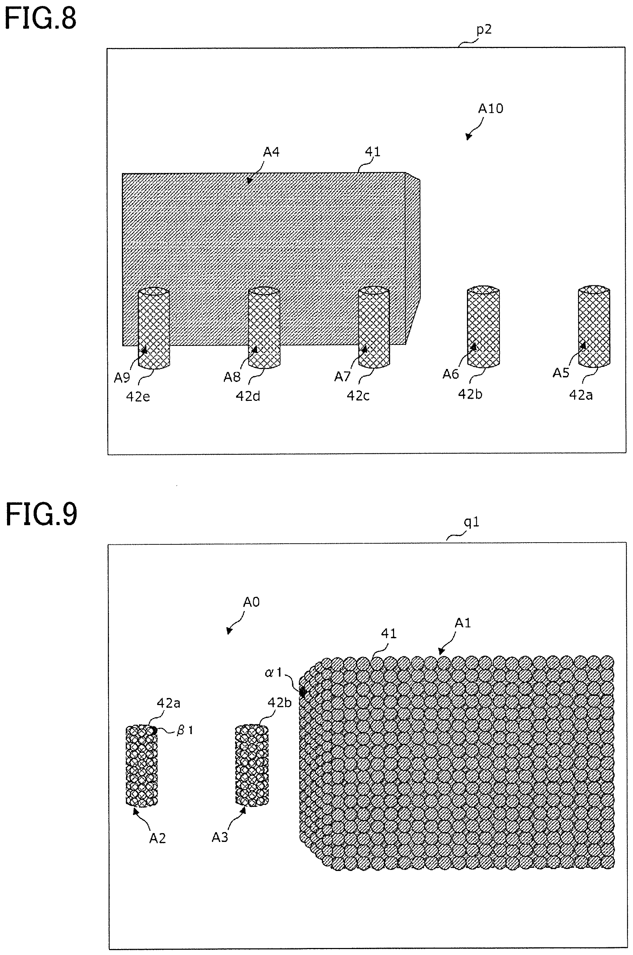

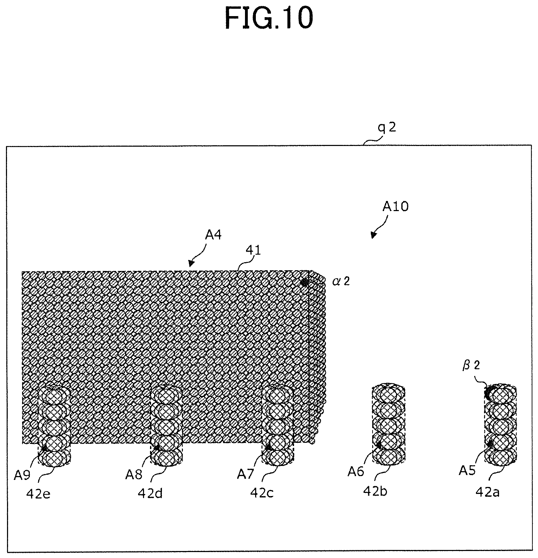

Next, with reference to FIG. 2 to FIG. 10, the following describes specifically an exemplary flow from obtaining the image information and the point cloud information to creating of the point cloud integrated information, in the point cloud information processing system 1 including the point cloud information processing device 10. FIG. 2 is a top view of the point cloud information processing system 1, showing a survey target and survey points. FIG. 3 is a diagram showing exemplary first image information P1 taken from a first survey point L1 in FIG. 2. FIG. 4 is a diagram showing exemplary first point cloud information Q1 scanned from the first survey point L1 in FIG. 2. FIG. 5 is a diagram showing exemplary second image information P2 taken from a second survey point L2 in FIG. 2. FIG. 6 is a diagram showing exemplary second point cloud information Q2 scanned from the second survey point L2 in FIG. 2. FIG. 7 is a diagram showing exemplary first labeled image information p1 generated through image analysis of the first image information P1. FIG. 8 is a diagram showing exemplary second labeled image information p2 generated through image analysis of the second image information P2. FIG. 9 is a diagram showing exemplary first labeled point cloud information q1 obtained by reflecting labels of the first labeled image information p1 on the first point cloud information Q1. FIG. 10 is a diagram showing exemplary second labeled point cloud information q2 obtained by reflecting labels of the second labeled image information p2 on the second point cloud information Q2. Note that, to make the description simple, it is assumed that the scales and accuracy of the first image information P1, the second image information P2, the first point cloud information Q1, the second point cloud information Q2 coincide with each other.

As shown in FIG. 2, the following description deals with a case of, for example, using the surveying device 20 to survey from the ground a building 41 and poles 42a to 42e next to the building 41 as survey targets. In FIG. 2, the upper side of the sheet is north, and the heights of the poles 42a to 42e arc lower than the height of the building 41.

First, the surveying device 20 is set up at the first survey point L1 (first viewpoint) that is to the southwest of the building 41, and generates, by using the imaging unit 21 and the scanner 22, the first image information and the first point cloud information including at least a part of the building 41 and the poles 42a to 42e, from the same viewpoint. From the first survey point L1 at this time, the poles 42c to 42e are blocked by the building 41 and not captured in the image. Therefore, the image taken by the imaging unit 21 of the surveying device 20 will be like, for example, the first image information P1 shown in FIG. 3. Similarly, point clouds generated by the scanner 22 of the surveying device 20 will be, for example, the first point cloud information Q1 as shown in FIG. 4. Each circle shown in FIG. 4 indicates a single point cloud, and each point is associated with RGB intensity and three-dimensional coordinates. Note that, in FIG. 4, to express the three-dimensional depth, the sizes of the point clouds are reduced with an increase in the distance from the viewer. However, due to the nature of the laser beam, the spot diameter (spot size) that is the beam width of the laser increases with an increase in the measurement distance. Therefore, in reality, data intervals of point clouds increase with an increase in the measurement distance.

Next, the surveying device 20 is set up at the second survey point L2 (second viewpoint) that is to the north of the building 41 as shown in FIG. 2, and generates the second image information and the second point cloud information including at least a part of the building 41 and the poles 42a to 42e in the similar manner to the case of the first survey point L1. From the second survey point L2 at this time, the poles 42a to 42e positioned in front of the building 41 are captured in the image. Therefore, the image information taken by the imaging unit 21 of the surveying device 20 will be like, for example, the second image information P2 shown in FIG. 5. Similarly, point clouds generated by scanning by the scanner 22 of the surveying device 20 will be, for example, the second point cloud information Q2 as shown in FIG. 6.

The first image information P1, the second image information P2, the first point cloud information Q1, and the second point cloud information Q2 generated in the surveying device 20 are transmitted in a wireless or wired manner to the point cloud information processing device 10. Note that the present embodiment processes pieces of the image information P1 and P2 and pieces of the point cloud information Q1 and Q2 obtained from two viewpoints L1 and L2, for the sake of simplifying the description. However, it is possible to process pieces of image information and pieces of point cloud information obtained from three or more different viewpoints.

Next, the image analyzer 31 of the point cloud information processing device 10 performs semantic segmentation processing to the first image information P1 by using a pre-machine-learned image analyzing model to generate the first labeled image information p1 shown in FIG. 7. In FIG. 7, the image analyzer 31 automatically recognizes an image region A1 as a region corresponding to the building 41, for example. Similarly, the image analyzer 31 automatically recognizes an image segment A2 corresponding to the pole 42a, an image segment A3 corresponding to the pole 42b, and an image segment A0 corresponding to a space, in the first image information P1.

Then, the point cloud labeling unit 32 assigns a label corresponding to the building 41 (hereinafter, building label) to each pixel in the image segment A1 shown in FIG. 7. Similarly, the point cloud labeling unit 32 assigns a label corresponding to the pole (hereinafter, pole label) to each pixel in the image segments A2 and A3. For each pixel of the other image segment in which an object is not recognized, the point cloud labeling unit 32 assigns a label corresponding to the space. This way, labels are assigned to all the pixels of the first image information to generate the first labeled image information p1.

Further, the image analyzer 31 performs the semantic segmentation processing to the second image information P2 to generate second labeled image information p2 as shown in FIG. 8. In FIG. 8, the image analyzer 31 automatically recognizes an image segment A4 as a segment corresponding to the building 41, for example. Similarly, the image analyzer 31 automatically recognizes image segments A5 to A9 as segments corresponding to the poles 42a to 42e, respectively.

Then, the point cloud labeling unit 32 labels each pixel in the image segments, that is, assigns a label corresponding to the building to each pixel in the image segment A4, a label corresponding to the pole to each pixel in the image segments A5 to A9, and a label corresponding to the space to each pixel of the image segment A10, as shown in FIG. 8. This way, labels are assigned to all the pixels of the second image information to generate the second labeled image information p2. Although FIG. 7 and FIG. 8 indicate different labeling in the form of different hatching, the different labels may be expressed, for example, in the form of different colors according to the label.

Next, the point cloud labeling unit 32 overlaps the first point cloud information Q1 with the first labeled image information p1 based on pieces of viewpoint positional information of the first labeled image information p1 and the first point cloud information Q1, and for each point, reflects, on that pixel, the label assigned to the overlapping pixel. Although it depends on the model and shooting conditions, the pixel resolution of the camera of the surveying device 20 in the present embodiment is, for example, 2 mm/pixel when the measurement distance is 10 m, and the resolution (data interval) of the laser scanner for the same measurement distance is, for example, 0.3 mm. Since the pixel resolution of the imaging unit 21 is greater than that of the scanner 22 when the measurement distance is the same, a plurality of points of the first point cloud information Q1 overlap with one pixel of the first labeled image information p1. Similarly for the second labeled image information p2 and the second point cloud information Q2, labels assigned to the pixels are reflected to the points in the overlapping positions. Thus, the first labeled point cloud information q1 of FIG. 9 in which labels assigned to the pixels of the first labeled image information p1 are reflected on the points of the first point cloud information Q1 and the second labeled point cloud information q2 of FIG. 10 in which labels assigned to the pixels of the second labeled image information p2 are reflected on the points of the second point cloud information Q2 are generated.

Next, for the points to which the label of the building that is the survey target and the label of the poles are assigned, the points being included in both the first labeled point cloud information q1 and the second labeled point cloud information q2, the point cloud integration unit 33 performs point cloud integration random sampling to accelerate the processing. For example, in the first labeled point cloud information of FIG. 9, a point α1 out of the point clouds to which the building label is assigned and a point β1 out of the point clouds to which the pole label is assigned are extracted through the random sampling. In the second labeled point cloud information, the points (matching points) with positional information matching with or neighboring to the point α1 and the point β1 are a point α2 and a point β2 shown in FIG. 10. Note that the number and the positions of the points to be extracted through the random sampling are not limited to the above, and points may be randomly sampled only from the point clouds to which the building label is assigned or only from the point clouds to which the pole label is assigned.

Then, the point cloud integration unit 33 performs matching and alignment (registration) based on the positional information of the randomly sampled part (e.g., point α1, point β1) of the point clouds of the first labeled point cloud information q1 and the randomly sampled part (e.g., point α2, point β2) of the point clouds of the second labeled point cloud information q2 to generate point cloud integrated information of the first labeled point cloud information q1 and the second labeled point cloud information q2.

The point cloud integration unit 33 performs the similar processing to pieces of point cloud information obtained from different viewpoints, and integrates them into the point cloud integrated information to generate a three-dimensional model.

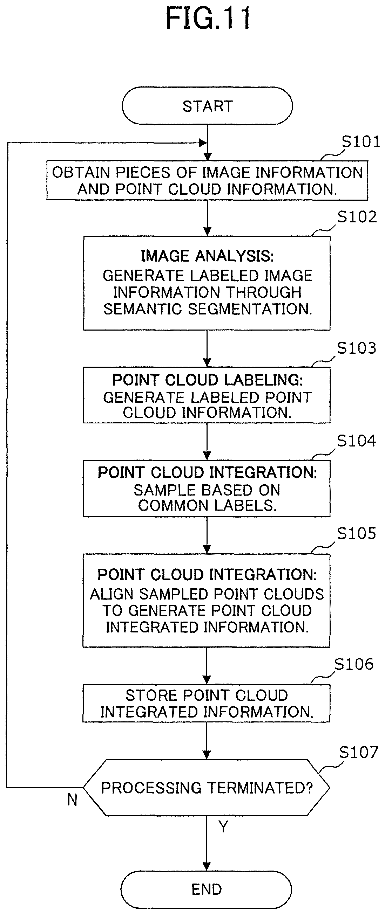

Next, the following describes, with reference to the flowchart shown in FIG. 11, an analysis processing operation executed by the analysis processor 30 of the point cloud information processing device 10 according to the present embodiment.

In step S101, the analysis processor 30 obtains pieces of image information taken by the imaging unit 21 from a plurality of viewpoints and pieces of point cloud information scanned by the scanner 22 from a plurality of viewpoints, from the surveying device 20 or the storage 13 via the communication unit 14. For example, the first image information P1 and the first point cloud information Q1 of the first survey point (first viewpoint) L1 and the second image information P2 and the second point cloud information Q2 of the second survey point (second viewpoint) L2 described above are obtained.

In step S102, the image analyzer 31 of the analysis processor 30 performs semantic segmentation processing to each piece of the image information obtained to generate labeled image information (image analyzing step). For example, through the above-described semantic segmentation processing to the first image information P1 and the second image information P2, the image analyzer 31 recognizes different segments in each image and assigns labels of the building, pole, space, or the like corresponding to the segments to generate the first labeled image information p1 and the second labeled image information p2.

In step S103, the point cloud labeling unit 32 of the analysis processor 30 generates labeled point cloud information from the labeled image information and the point cloud information of the same viewpoint (point cloud labeling step). For example, for each point in the above-described first point cloud information Q1, the point cloud labeling unit 32 assigns labels of segments corresponding to those in the first labeled image information p1, based on the positional information of each point, to generate the first labeled point cloud information. Similarly, for each point in the second point cloud information, the point cloud labeling unit 32 assigns labels of segments corresponding to those in the second labeled image information p2, based on the positional information of each point, to generate the second labeled point cloud information q2.

In step S104, the point cloud integration unit 33 of the analysis processor 30 performs random sampling for the point clouds with labels common in each piece of the labeled point cloud information, and obtains positional information for each of the randomly sampled point clouds. For example, the point cloud integration unit 33 performs random sampling for point clouds with the labels of the building and the pole which are common in both the first labeled point cloud information q1 and the second labeled point cloud information q2, and obtains positional information of a part of the point clouds of the building and the pole (e.g., point α1, point β1).

Subsequently in step S105, the point cloud integration unit 33 performs matching and alignment (registration) of the points in the pieces of labeled point cloud information from different viewpoints based on the positional information of the point clouds randomly sampled, thereby generating the point cloud integrated information. For example, the point cloud integration unit 33 matches and aligns (registration) a part of the randomly sampled point clouds (point α1, point β1) of the building and the pole in the first labeled point cloud information q1 with the point clouds (point α2, point β2) of the building and the pole in the second labeled point cloud information q2, with matching or neighboring positional information, thereby generating the point cloud integrated information of the first labeled point cloud information q1 and the second labeled point cloud information q2.

In step S106, the point cloud integration unit 33 stores the point cloud integrated information in the storage 13. Note that the point cloud integration unit 33, at this time, may display the generated point cloud integrated information on the output unit 12 in such a manner that a user can visually recognize it.

In step S107, the analysis processor 30 determines whether to terminate the analysis processing. For example, when all the pieces of point cloud information that are stored in the storage 13 and that should be processed are integrated, or when the user performs a stopping operation and the like, the above determination results in true (Y), and the analysis processing is terminated. On the other hand, when there is no stopping operation by the user and there still remains point cloud information to be processed in the storage 13, the above determination will result in false (N), and the processing returns to step S101 to repeat the above-described processing for another piece of image information and another piece of point cloud information.

As described, the point cloud information processing device 10 of the present embodiment generates pieces of labeled image information by labeling each segment in images of the image information, generates pieces of labeled point cloud information by also labeling the pieces of point cloud information based on the pieces of labeled image information, and performs alignment (registration) of the pieces of the labeled point cloud information by using common labels.

By aligning the point clouds based on the labels assigned to the pieces of point cloud information, even an object with a small amount of characteristics such as a thin wall can be easily recognized by assigning a label corresponding to the wall to the object. Further, the point cloud information processing device 10 can easily exclude an object such as a leave waving in the wind or a moving object such as an automobile from the survey target by assigning a label of a tree, a moving object, and the like to those objects.

Therefore, the point cloud information processing device 10 provides a point cloud information processing device, a point cloud information processing method, and a point cloud information processing program which improves robustness in alignment of a plurality of point clouds by using pieces of image information and pieces of point cloud information obtained from a plurality of different viewpoints by using a surveying device 20.

Further, the point cloud integration unit 33 of the point cloud information processing device 10 performs random sampling for the point clouds with labels common in each piece of the labeled point cloud information, and aligns the point clouds on the basis of positional information of the randomly sampled point clouds. This random sampling after narrowing down the point clouds by the labels allows more efficient alignment.

Further, with the image analyzer 31 of the point cloud information processing device 10 performing so-called semantic segmentation processing by using a pre-machine-learned image analyzing model, different segments in the image can be easily recognized and labeled.

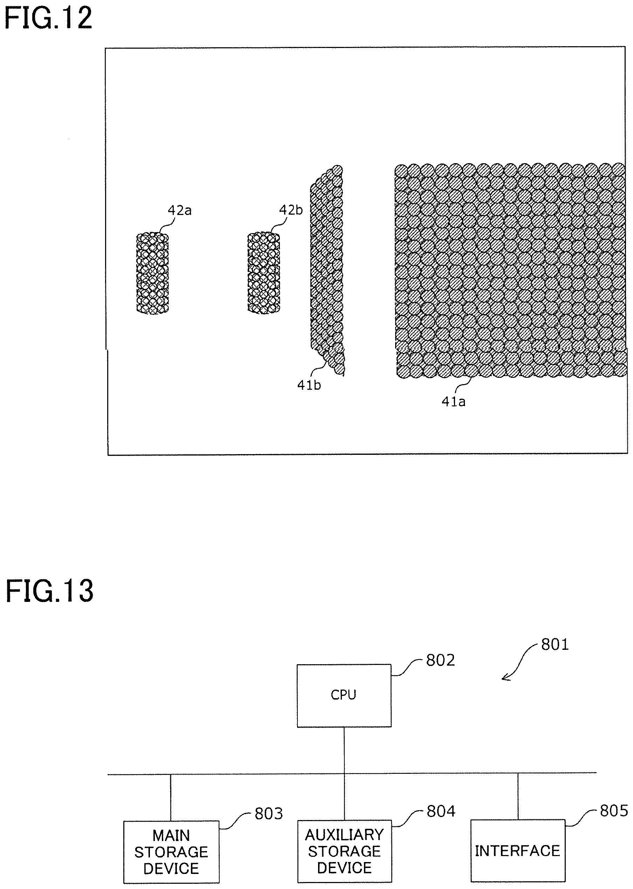

Further, with the point cloud integrated information in which pieces of labeled point cloud information are aligned by using labels, point clouds are displayed differently based on their labels. This makes it easier to confirm misalignment, in a case where the alignment fails and for example point clouds are separated from each other. Specifically, FIG. 12 shows exemplary display of point cloud integrated information (three-dimensional model) in which alignment is failed. In the illustration of the figure, the point clouds corresponding to a first wall 41a and a second wall 41b of the building 41 are separated from each other. The first wall 41a and the second wall 41b arc each assigned the building label and are displayed in the same form (e.g., in the same color). This way, the user is able to easily find out that the first wall 41a and the second wall 41b are separated from each other. Note that, for example, the point cloud integration unit may automatically detect separated point clouds having the same label from the point cloud integrated information generated, and perform correction processing to correct the separation.

### <Program>

The following details a program for achieving functions constituting the point cloud information processing device 10 of the present embodiment.

The point cloud information processing device 10 is implemented in a computer 801 shown in FIG. 13. Operations of elements constituting the point cloud information processing device 10 are stored in a form of a program in an auxiliary storage device 804 or an external server and the like that can communicate in a wireless or wired manner, and the program is in an executable state. CPU 802 reads out the program from the auxiliary storage device 804, and loads the program into the main storage device 803 to execute the above-described processing according to the program. Further, the CPU 802 reserves a storage area corresponding to the above-described storage 13 in the main storage device 803 according to the program.

Specifically, the program causes the computer 801 to execute: an image analyzing step of analyzing first image information taken from a first viewpoint and second image information taken from a second viewpoint, recognizing different segments in each of the images, assigning a label to each of the segments, and generating first labeled image information and second labeled image information; a point cloud labeling step of obtaining first point cloud information including a group of points with positional information scanned from the first viewpoint and second point cloud information including a group of points with positional information scanned from the second viewpoint, assigning, for each point in the first point cloud information, a label of a corresponding segment in the first labeled image information, based on the positional information of the point, to generate first labeled point cloud information, and assigning, for each point in the second point cloud information, a label of a corresponding segment in the second labeled image information, based on the positional information of the point, to generate second labeled point cloud information; and a point cloud integrating step of aligning the first labeled point cloud information and the second labeled point cloud information by using labels that are common in the first labeled point cloud information and the second labeled point cloud information.

It should be noted that the auxiliary storage device 804 is an example of a non-transitory tangible medium. Other examples of such a non-transitory tangible medium include a magnetic disk, a magneto-optical disk, a CD-ROM, a DVD-ROM, a semiconductor memory, and the like which are connected through an interface. In cases where the program is delivered to the computer 801 through a network, the computer 801 that has received the program may load the program into the main storage device 803 and execute the above-described process.

Further, the program may achieve a part of the above-described functions. Further, the program may be a so-called differential file (differential program) that achieves the above-described functions in combination with another program already stored in the auxiliary storage device 804.

Thus, the description of each embodiment of the present disclosure ends; however, the form of the present disclosure is not limited to the embodiments described above.

In the above-described embodiment, the point cloud integration unit 33 extracts, from the storage 13, pieces of labeled point cloud information having different pieces of viewpoint positional information, extracts by sampling (e.g., random sampling) point clouds with labels common in each piece of the labeled point cloud information, and obtains the positional information of each of the point clouds extracted. Then, the point clouds whose positional information is obtained are aligned (registered) through a point cloud matching technique such as ICP (Iterative Closest Point), for example. However, the techniques for sampling and alignment are not limited to these. For example, a representative value indicating the position of an object may be calculated from the point cloud, for aligning the point clouds.

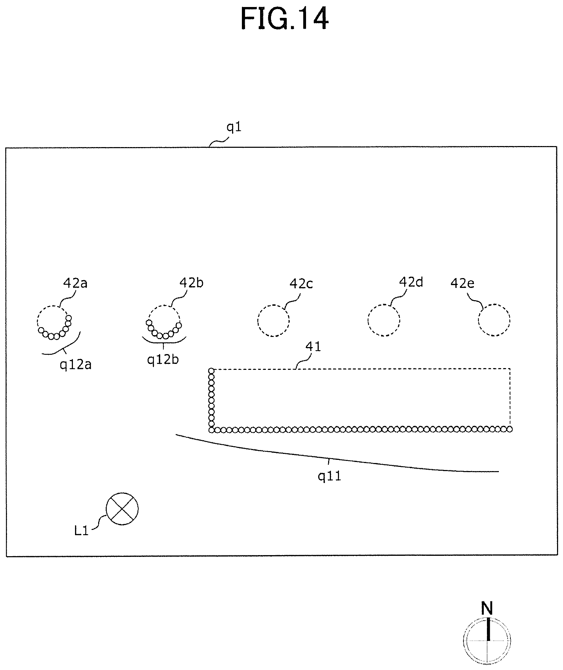

With reference to FIG. 14 to FIG. 21, the following describes a first variation in which: the point cloud integration unit 33 generates a representative point from a group of point clouds forming at least a part of an object corresponding to a label in the first labeled point cloud information q1 and the second labeled point cloud information q2; performs random sampling from a plurality of objects by using common labels; and aligns the first labeled point cloud information q1 and the second labeled point cloud information q2 based on the representative points of the randomly sampled objects.

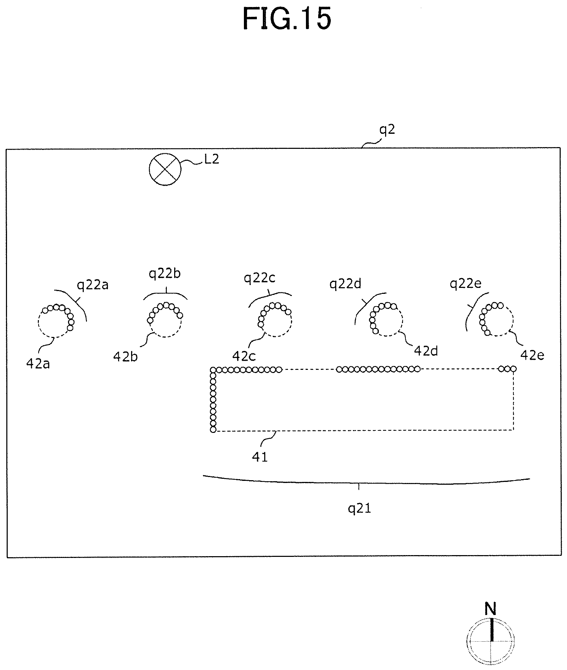

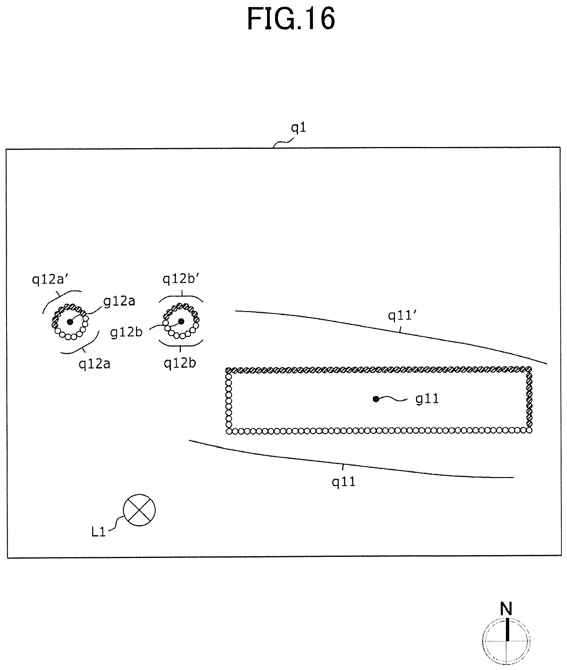

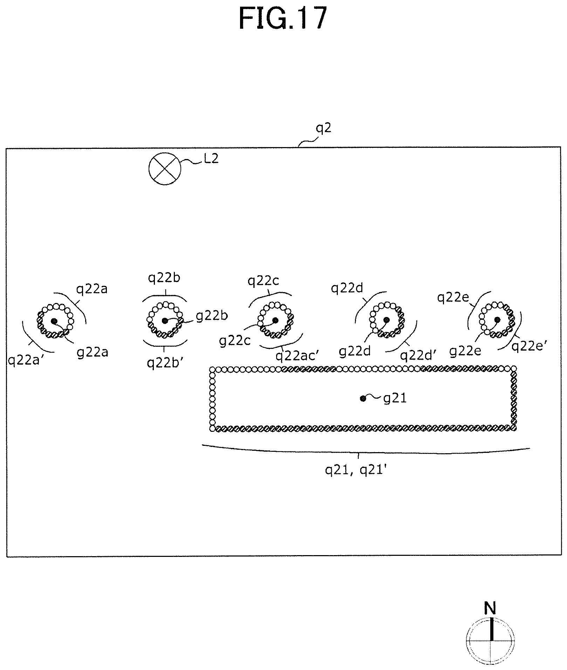

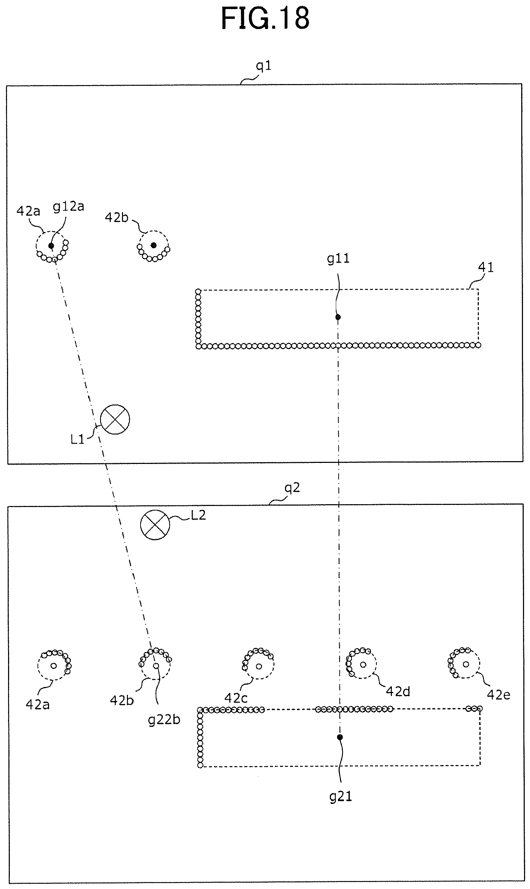

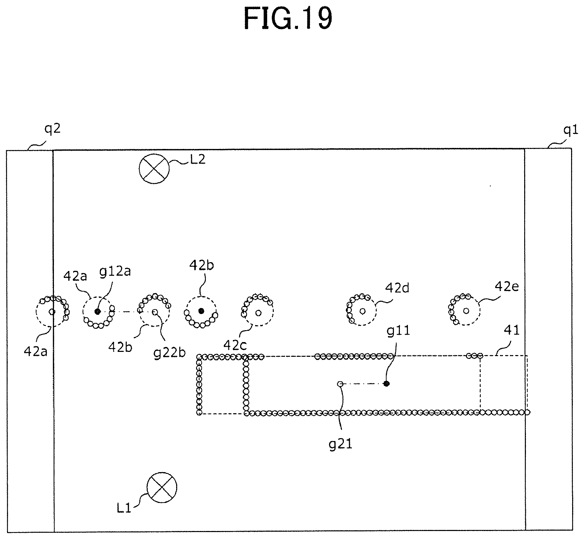

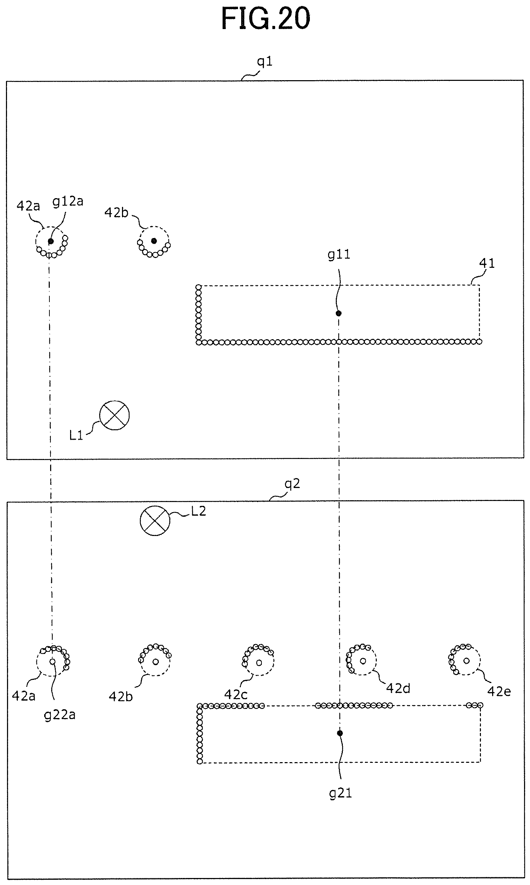

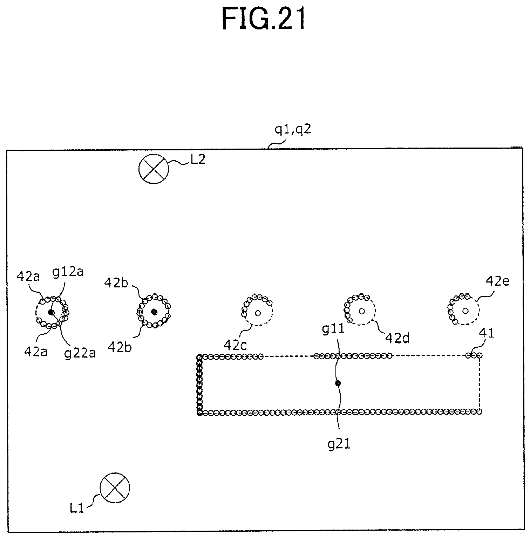

FIG. 14 is a top view of the first labeled point cloud information q1 in FIG. 9. FIG. 15 is a top view of the second labeled point cloud information q2 in FIG. 10. FIG. 16 is a top view showing an example of fitting an object model to the first labeled point cloud information q1. FIG. 17 is a top view showing an example of fitting an object model to the second labeled point cloud information q2. FIG. 18 is a top view showing an example of sampling a mismatching object between pieces of labeled point cloud information. FIG. 19 is a top view showing exemplary alignment using representative points of the object sampled in FIG. 18. FIG. 20 is a top view showing an example of sampling a matching object between pieces of labeled point cloud information. FIG. 21 is a top view showing exemplary alignment using representative points of the object sampled in FIG. 20.

In FIGS. 14 and 15, the exterior shapes of the real images of the building 41 and poles 42a to 42e are indicated by broken lines, and points included in the point cloud information are indicated by solid circles. As shown in FIG. 14, the first labeled point cloud information q1 includes a group of point clouds q11 arranged in a rectangular surface shape along the south wall surface and the west wall surface of the building 41. Further, the first labeled point cloud information q1 includes groups of point clouds q12a and ql2b arranged in a semicircular cylindrical shape along the south surfaces of the poles 42a and 42b. Similarly, as shown in FIG. 15, the second labeled point cloud information q2 includes a group of point clouds q21 arranged in a rectangular surface shape along the north wall surface and the west wall surface of the building 41, and includes groups of point clouds q22a to q22e arranged in a semicircular cylindrical shape along the north surfaces of the poles 42a to 42e. To a group of point clouds forming at least a part of the object, the point cloud integration unit 33 fits a corresponding object model, and performs complementing processing for parts that are not obtainable by scanning from the survey point L1 or L2. The object model is stored in advance in the storage 13. For example, a representative shape corresponding to an object, such as a cylindrical shape for a pole or a cubic shape in the case of a building, is stored as the object model. Since the object model only needs to reflect the approximate size and position of the object to be fitted, the object model may simply be a cylinder, an elliptical cylinder, or the like.

Specifically, the point cloud integration unit 33 fits a cubic shaped building model for the building 41 and a cylindrical pole model for the poles 42a and 42b in the first labeled point cloud information q1 shown in FIG. 14, thereby generating complementary point clouds q11', q12a', and q12b' indicated by hatching in FIG. 16. Note that the complemented part is not limited to the point cloud information as long as the exterior shape and the positional information of the object can be determined.

Then, the point cloud integration unit 33 generates a representative point based on the group of the point clouds and complementary point clouds of each object. The representative point may be a point obtained by calculating the center of the group of point clouds. Specifically, the point cloud integration unit 33 calculates a center point g12a based on three-dimensional positional information of the group of point clouds q12a corresponding to the pole 42a of FIG. 16, and its complementary point clouds q12a'. Similarly, center points g12b and g11 are calculated for the pole 42b and the building 41, respectively. Then the point cloud integration unit 33 sets the center points g11, g12a, and g12b as the representative points of the objects, and store these representative points in the storage 13, in association with the building label or the pole label corresponding to the objects.

Similarly for the second labeled point cloud information q2 shown in FIG. 17, the point cloud integration unit 33 calculates center points g21, g22a to g22e, and sets these points as the representative points of the objects, and store them in the storage 13 in association with the building label or the pole label.

Next, for each piece of the labeled point cloud information q1 and q2, the point cloud integration unit 33 performs sampling for each label, and performs alignment using the representative value of the sampled object. For example, to make the description simple, the following example assumes that the number of points sampled for each label is 1. That is, one point is sampled for the pole label, and one point is sampled from the building label.

In the first labeled point cloud information q1 of FIG. 18, the pole 42a is selected for sampling of the pole label and the building 41 is selected for sampling of the building label. On the other hand, in the second labeled point cloud information q2, the pole 42b is selected for sampling of the pole label and the building 41 is selected for sampling of the building label.

The representative point g12a of the pole 42a and the representative point g11 of the building 41 in the first labeled point cloud information q1 are aligned with the representative point g22b of the pole 42b and the representative point g21 of the building 41 in the second labeled point cloud information q2. This alignment is, for example, performed by overlapping pieces of point cloud information so as to minimize the distance between the representative points of the same label. That is, as shown in FIG. 19, objects of the first labeled point cloud information q1 and the second labeled point cloud information q2 do not match and there is misalignment of the representative points.

On the other hand, in the first labeled point cloud information q1 of FIG. 20, the pole 42a is selected for sampling of the pole label and the building 41 is selected for sampling of the building label. Further, also in the second labeled point cloud information q2, the pole 42a is selected for sampling of the pole label and the building 41 is selected for sampling of the building label.

When the representative point g12a of the pole 42a and the representative point g11 of the building 41 in the first labeled point cloud information q1 are aligned with the representative point g22a of the pole 42a and the representative point g21 of the building 41 in the second labeled point cloud information q2, the objects in the first labeled point cloud information q1 and the second labeled point cloud information q2 are substantially matched with each other, and the position of the representative points also substantially match with each other, as shown in FIG. 21. As described, the alignment is performed by repeating the sampling until the representative points of the objects, including the non-sampled objects, match with each other or are brought within a predetermined range.

This sampling from the object of the same label allows more efficient alignment. By calculating the representative point of each object and performing the alignment, the rough alignment can be performed first. Further, by fitting the object model corresponding to the label and calculating the representative point, the positional accuracy of the representative point can be improved.

In the above-described embodiment, the point cloud information processing device 10 is provided separately from the surveying device 20. However, it is possible to mount the point cloud information processing device 10 in the surveying device 20, so as to enable displaying and editing on the output unit of the surveying device 20 or an output unit of a tablet for operating the surveying device 20, through real-time processing. This way, even if a moving object such as a vehicle or heavy machinery is in the image or the point clouds as noise, it is possible to generate integrated point clouds after editing to remove such noise from the point cloud information at the site while looking at the display of the output unit. That is, accurate point cloud information can be generated at the surveying site.

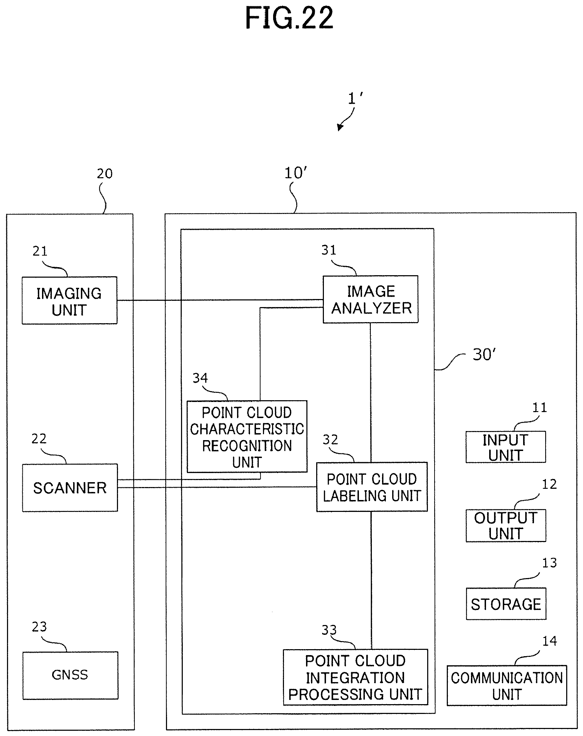

Further, a point cloud information processing system 1' including a point cloud information processing device 10' of a second variation as shown in FIG. 22 may be adopted. In the second variation, a point cloud characteristic recognition unit 34 is added to the analysis processor 30 of the foregoing embodiment to form an analysis processor 30'. The point cloud characteristic recognition unit 34 recognizes a survey target by extracting a segment in which the normal vectors obtained from the positional information of the adjacent point clouds and the RGB intensities are uniform, and performs simplified point cloud segmentation. The point cloud segmentation information can be used for correction (noise removal or the like) after segmentation processing of the image information in the image analyzer 31. As a result, a more accurate image segmentation processing result is obtained, and the alignment accuracy as a whole is improved. The original image before the segmentation and the result of correction after the segmentation processing can be used as a new machine learning data set for an image recognition model.

Further, the above-described embodiment deals with a case where the imaging unit 21 is a visible light camera configured to generate two-dimensional image information including RGB intensity; however, an infrared camera configured to generate a two-dimensional image information including infrared information and the like. In this case, the infrared intensity and three-dimensional coordinates are associated with each other for each point of the point clouds. This allows survey even during a night where the field of view is dark.

Further, the point cloud labeling unit 32 of the above-described embodiment assigns the same "pole label" to a plurality of poles. However, the pole 42a, the pole 42b, and the like may be individually recognized and assigned with separate labels, such as "first pole" and "second pole". This improves the accuracy of alignment.

## Claims

1. A point cloud information processing device configured to integrate pieces of point cloud information from a plurality of different viewpoints, the device **characterized by** comprising:
an image analyzer (31) configured to analyze a first image taken from a first viewpoint and a second image taken from a second viewpoint, recognize different segments in each of the images, assign a label to each of the segments, and generate a first labeled image and a second labeled image;
a point cloud labeling unit (32) configured to obtain first point cloud information including a group of points with positional information scanned from the first viewpoint and second point cloud information including a group of points with positional information scanned from the second viewpoint, assign, for each point in the first point cloud information, a label of a corresponding segment in the first labeled image, based on the positional information of the point, to generate first labeled point cloud information, and assign, for each point in the second point cloud information, a label of a corresponding segment in the second labeled image, based on the positional information of the point, to generate second labeled point cloud information; and
a point cloud integration unit (33) configured to align the first labeled point cloud information and the second labeled point cloud information by using labels that are common in the first labeled point cloud information and the second labeled point cloud information.

2. The point cloud information processing device of claim 1, wherein
the point cloud integration unit (33) performs random sampling with respect to point clouds assigned with a label common in the first labeled point cloud information and the second labeled point cloud information, and performs alignment of the first labeled point cloud information and the second labeled point cloud information based on the positional information of the point clouds randomly sampled.

3. The point cloud information processing device of claim 1, wherein
from a group of point clouds forming at least a part of an object corresponding to the label in the first labeled point cloud information and the second labeled point cloud information, the point cloud integration unit (33) generates a representative point for the object, performs random sampling with respect to a plurality of the objects by using common labels, and aligns the first labeled point cloud information and the second labeled point cloud information based on the representative point of the object randomly sampled.

4. The point cloud information processing device of any one of claims 1 to 3, wherein
the image analyzer (31) analyzes the first image and the second image by using a pre-machine-learned image analyzing model, recognizes different segments in each image, and labels the segments to generate a first labeled image and a second labeled image.

5. The point cloud information processing device of any one of claims 1 to 4, wherein
the point cloud integration unit (33) is capable of displaying the point clouds of the first labeled point cloud information and the second labeled point cloud information, by difference appearances for each of the labels assigned to the point clouds.

6. A point cloud information processing method for integrating pieces of point cloud information from a plurality of different viewpoints, the method **characterized by** comprising:
an image analyzing step of an image analyzer (31) analyzing a first image taken from a first viewpoint and a second image taken from a second viewpoint, recognizing different segments in each of the images, assigning a label to each of the segments, and generating a first labeled image and a second labeled image;
a point cloud labeling step of a point cloud labeling unit (32) obtaining first point cloud information including a group of points with positional information scanned from the first viewpoint and second point cloud information including a group of points with positional information scanned from the second viewpoint, assigning, for each point in the first point cloud information, a label of a corresponding segment in the first labeled image, based on the positional information of the point, to generate first labeled point cloud information, and assigning, for each point in the second point cloud information, a label of a corresponding segment in the second labeled image, based on the positional information of the point, to generate second labeled point cloud information; and
a point cloud integrating step of a point cloud integration unit (33) aligning the first labeled point cloud information and the second labeled point cloud information by using labels that are common in the first labeled point cloud information and the second labeled point cloud information.

7. A point cloud information processing program that causes a computer to integrate pieces of point cloud information from a plurality of different viewpoints, **characterized in that** the program causes the computer to execute:
an image analyzing step of analyzing a first image taken from a first viewpoint and a second image taken from a second viewpoint, recognizing different segments in each of the images, assigning a label to each of the segments, and generating a first labeled image and a second labeled image;
a point cloud labeling step of obtaining first point cloud information including a group of points with positional information scanned from the first viewpoint and second point cloud information including a group of points with positional information scanned from the second viewpoint, assigning, for each point in the first point cloud information, a label of a corresponding segment in the first labeled image, based on the positional information of the point, to generate first labeled point cloud information, and assigning, for each point in the second point cloud information, a label of a corresponding segment in the second labeled image, based on the positional information of the point, to generate second labeled point cloud information; and
a point cloud integrating step of aligning the first labeled point cloud information and the second labeled point cloud information by using labels that are common in the first labeled point cloud information and the second labeled point cloud information.
